# EUROPEAN PATENT SPECIFICATION

(11) **EP 4 353 638 B1**
(45) Date of publication and mention of the grant of the patent: **13.05.2026**
(21) Application number: 23202603.9
(22) Date of filing: 10.10.2023
(51) Int. Cl.: B65G 47/86

(54) **MECHANICAL GRIPPER**
MECHANISCHER GREIFER
PINCE MÉCANIQUE

(30) Priority: 11.10.2022 JP 2022163321
(43) Date of publication of application: 17.04.2024
(73) Proprietor: Shibuya Corporation, Kanazawa-shi, Ishikawa 920-8681 (JP)
(72) Inventor: Washi, Naoya, Kanazawa-shi, Ishikawa 920-8681 (JP)
(74) Representative: Hoffmann Eitle

(56) References cited:
- WO-A1-2012/081489
- DE-A1- 102018 217 776
- FR-A1- 3 121 134
- JP-A- H06 115 660

## Description

### BACKGROUND OF THE INVENTION

### 1. Field of the Invention

The present invention relates to a mechanical gripper that grips and transports a container.

### 2. Description of the Related Art

A container processing system is known that performs processes such as filling and capping while transporting a container by alternately gripping the upper and lower sides of the flange of the container with grippers provided on different rotating wheels. As for a gripper on a rotating wheel that grips the upper part of the flange, an open/close type gripper uses an open/close mechanism such as a device comprising a cam and a cam follower. On the other hand, a gripper on a rotating wheel that grips the lower part of the flange uses a flat spring type gripper in which the gripper is regularly biased in the closing direction by the spring. In some of these container processing systems, there has also been proposed a flat spring type gripper that is made swingable for changing the pitch of containers being transported, see JP 4026861 B2 or JP 6306409 B2. In such system, a mechanism such as a cam or gear is used to swing the flat spring type gripper.

JP H06 115660 A concerns a rotary type bottle inspection machine which can be operated at high speed without applying excessive force on the parts, thereby anticipating the preamble of claim 1.

FR 3 121 134 A1 concerns an article conveying unit comprising extendable arm transfer devices.

### SUMMARY OF THE INVENTION

However, the swingable grippers in Japanese Patent Nos. 4026861 and 6306409 are limited to the flat spring type grippers, so it is not possible to swing a gripper on the rotating wheel equipped with the mechanical grippers, i.e., the open/close type grippers. Consequently, the conventional system requires the arrangement of the rotating wheel with the flat spring type grippers to be downstream of the rotating wheel with the mechanical grippers so that the flat spring type grippers are swung instead of the mechanical grippers. Namely, the rotating wheels that can be adapted to swing the grippers in the system are limited to restrict the degrees of freedom in the system design.

The purpose of the present invention is to provide a mechanical gripper that can swing back and forth in the gripper conveyance direction in a simple configuration.

From one aspect of the present invention, as defined in claim 1, a mechanical gripper comprises a pair of gripper parts pivotally arranged about the same axis; a biasing member that biases the gripper parts to approach each other; a first cam follower connected to one of the gripper parts; a second cam follower connected to the other gripper part; a first cam that engages with the first cam follower for displacing the first cam follower; and a second cam that engages with the second cam follower for displacing the second cam follower. The **first cam follower is configured to engage with the first cam and the second cam follower is configured to engage with the second cam such that the** first cam follower and the second cam follower are both displaced when opening/closing the pair of gripper parts; and either one of the first cam follower or the second cam follower **is configured to be engaged with the first cam or the second cam accordingly in order to be** displaced when swinging the pair of gripper parts.

### BRIEF DESCRIPTION OF THE DRAWINGS

The objects and advantages of the present invention will be better understood from the following description with references to the accompanying drawings in which:
FIG. 1 is a plan view illustrating an arrangement of a container processing system using a mechanical gripper of an embodiment of the present invention;
FIG. 2 is an elevational view of a container in the conveyance direction, wherein the container is gripped by the mechanical gripper in the outer surface sterilization area;
FIG. 3 is an elevational view of the container in the conveyance direction, wherein the container is gripped by the mechanical gripper in the inner surface sterilization area;
FIG. 4 is a perspective view illustrating the configuration of the mechanical gripper of the sterilization wheel that grips the container;
FIG. 5 is an elevational sectional view of the mechanical gripper that grips the container;
FIG. 6 illustrates the configuration of the mechanical gripper opened in the delivery position;
FIG. 7 is a plan view illustrating the configuration of the gripper shown in FIG. 6 separated into left and right sides for convenience; and
FIG. 8 is a plan view illustrating the posture of the mechanical gripper at five positions as it moves along the first cam.

### DESCRIPTION OF THE PREFERRED EMBODIMENTS

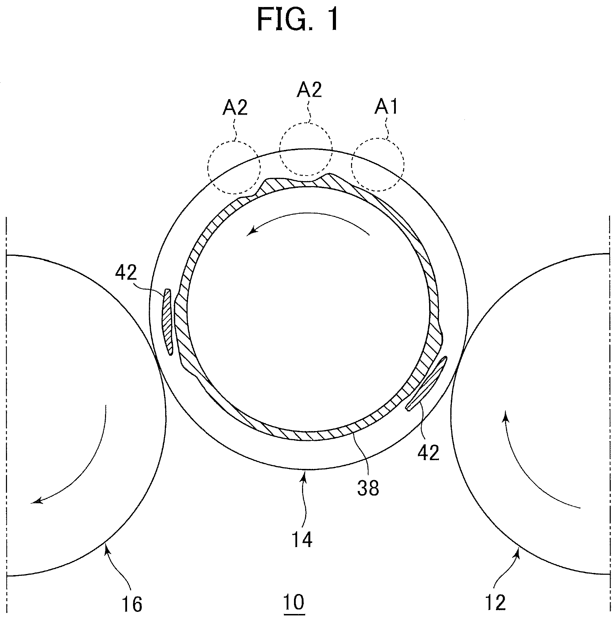

The present invention is described below with references to the embodiments shown in the drawings. Fig. 1 is a plan view illustrating the arrangement of a container processing system using a mechanical gripper of an embodiment of the present invention.

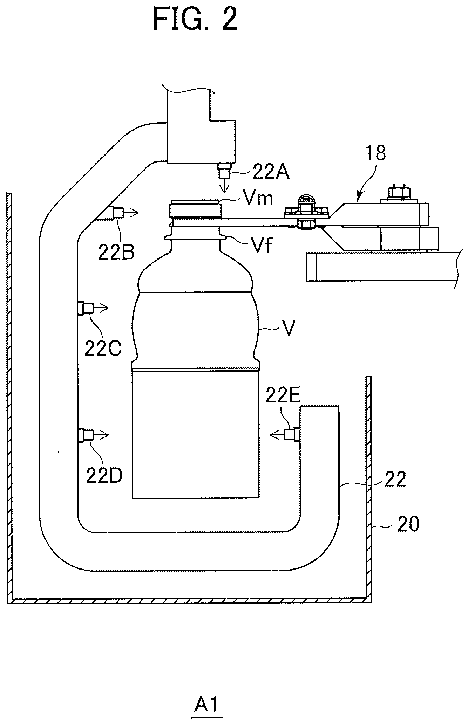

The container processing system 10 of the present embodiment is a system that performs liquid-filling and capping of a container V and the like, while conveying the container V. The container V is, for example, a bottle provided with a flange Vf at the neck (see FIG. 2). The container V is conveyed while the upper or lower part of the flange Vf is gripped by each gripper provided along the outer periphery of the rotating wheel. The container V is transferred between rotating wheels, and during this transfer, the positions gripped by the grippers are alternately switched between the upper side and the lower side of the flange Vf. Note that the lower side of the flange Vf is gripped by a flat spring type gripper, and the upper side of the flange Vf is gripped by a mechanical gripper 18, i.e., an open/close type gripper.

The container processing system 10, for example, includes a sterilization wheel 14 for sterilizing containers V. As shown in FIG. 1, the container V is delivered to the sterilization wheel 14 from the supply wheel 12. Then, while the container V is moved along the outer periphery of the sterilization wheel 14, the container V is sterilized and delivered to the discharge wheel 16. On the sterilization wheel 14 of the present embodiment, the outside of the container is sterilized (outer surface sterilization) on an outer surface sterilization area A1, and the inside of the container is sterilized (inner surface sterilization) on an inner surface sterilization area A2. Although the order and number of times the external sterilization and the internal sterilization are performed can be arbitrary, on the sterilization wheel 14 of the present embodiment, the internal sterilization is performed twice after a single external sterilization is performed.

FIG. 2 is an elevational view of the container V in the conveyance direction, wherein the container V is gripped by the mechanical gripper 18 in the outer surface sterilization area A1. FIG. 2 shows the arrangement of the mechanical gripper 18 that grips the container V, a hood 20 (cross-sectional view), and a sterilizing gas supply pipe 22 that injects sterilizing gas such as hydrogen peroxide gas. The hood 20 is arranged on the outer periphery of the sterilization wheel 14, surrounding the outer surface sterilization area A1 and the two inner surface sterilization areas A2.

In the outer surface sterilization area A1, the mechanical gripper 18 is directed toward the radial direction of the sterilization wheel 14. The container V is conveyed along the outer periphery of the sterilization wheel 14 while the upper part of the flange Vf is gripped by the mechanical type gripper 18. The sterilizing gas supply pipe 22 having a substantially C-shape is arranged in the outer surface sterilization area A1. The container V gripped by the mechanical gripper 18 is conveyed through the C-shaped sterilizing gas supply pipe 22. A plurality of outer surface sterilizing nozzles 22A-22E that inject sterilizing gas toward the container V being transported are provided on the inner side wall of the C-shaped sterilizing gas supply pipe 22. Note that the outer surface sterilizing nozzles 22A-22E are arranged so that the entire outer surface of the container V conveyed through the sterilization supply pipe 22 is exposed to the sterilization gas.

Furthermore, outside of the sterilizing gas supply pipe 22 in the outer surface sterilization area A1, the hood 20 having a substantially J-shaped cross section is provided along the transport path so as to surround the sterilizing gas supply pipe 22 from three directions, i.e., from the outside, the bottom, and the inside of the sterilization wheel 14. This prevents the sterilizing gas injected from the outer surface sterilizing nozzles 22A-22E toward the container V from diffusing into the surroundings.

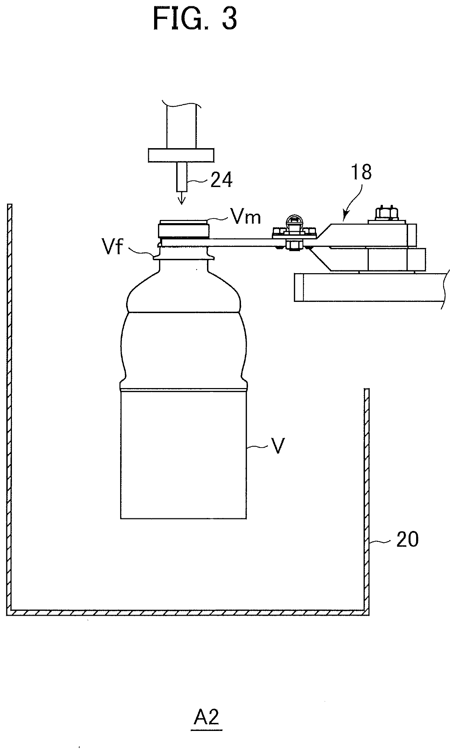

FIG. 3 is an elevational view of the container V in the conveyance direction, wherein the container V is gripped by the mechanical gripper 18 in the inner surface sterilization area A2, as viewed in the conveyance direction. In FIG. 3, the arrangement of the mechanical gripper 18 that grips the container V, the hood 20 (cross-sectional view), and an internal sterilizing nozzle 24 that injects sterilizing gas such as hydrogen peroxide gas into the container through the mouth portion Vm of the container V is illustrated.

The inner surface sterilizing nozzle 24 is arranged approximately directly above the center of the mouth portion Vm of the container V being transported. Namely, the sterilizing gas is supplied from directly above the mouth portion Vm of the container V being conveyed and injected into the inside of the container V, which is conveyed in an upright state through the inner surface sterilization area A2. Note that the container V being transported is surrounded by the hood 20 from three directions, i.e., from the outside, the bottom, and the inside of the sterilization wheel 14a.

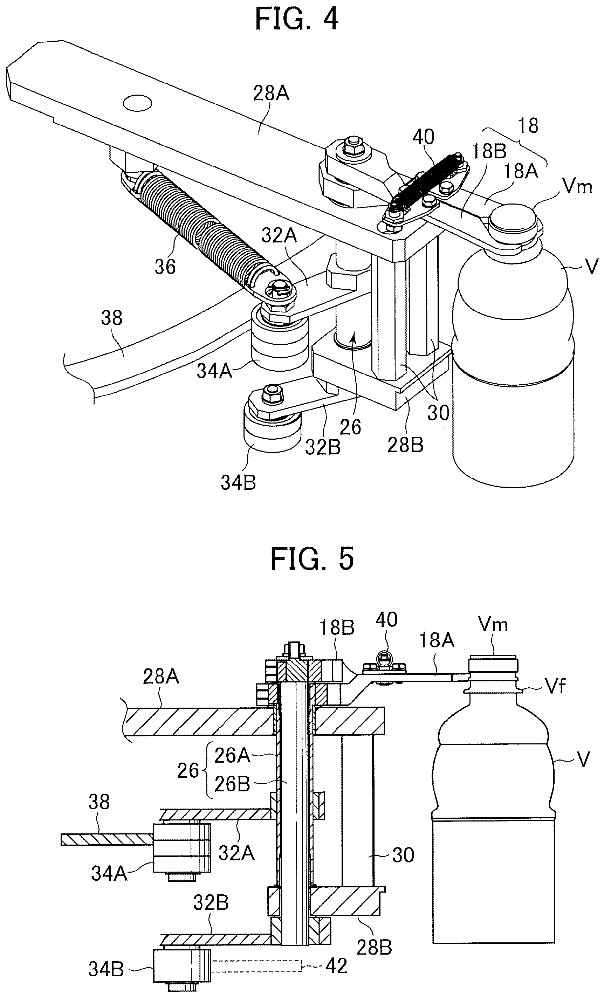

FIG. 4 is a perspective view illustrating the configuration of the mechanical gripper 18 of the sterilization wheel 14 that grips the container V. FIG. 5 is an elevational sectional view about the mechanical gripper 18 that grips the container V.

In the inner surface sterilization area A2, sterilizing gas can only be injected into the container V by the inner surface sterilizing nozzle 24 while the mouth portion Vm of the container V is located below the inner surface sterilizing nozzle 24. Therefore, when the rotational speed of the sterilization wheel 14 is increased in order to increase the processing speed of the container V, the time for the mouth portion Vm of the container V to pass under the inner sterilizing nozzle 24 is shortened, thereby allowing an insufficient amount of sterilization gas to be supplied into the container V. In the present embodiment, the time for the mouth portion Vm of the container V to pass under the inner surface sterilizing nozzle 24 is extended by swinging the mechanical gripper 18 that grips the container V and thereby allowing a sufficient amount of sterilizing gas to be supplied into the container V. Namely, the mechanical gripper 18 is swung forward on the upstream side of the inner surface sterilizing nozzle 24, and the mechanical gripper 18 is swung backward on the downstream side of the inner surface sterilizing nozzle 24.

As illustrated in FIG. 4, the mechanical gripper 18 includes a pair of gripper parts 18A and 18B. The base ends of the gripper parts 18A and 18B are stacked one on top of the other and are coaxially journaled on the same rotational shaft 26. On the other hand, the tip end sections of the gripper parts 18A and 18B, which grip the neck of the container V, are arranged at the same height.

The rotational shaft 26 has a double structure including a cylindrical shaft 26A and a central shaft 26B rotatably fitted within the cylindrical shaft 26A. The cylindrical shaft 26A is pivotally supported at upper and lower locations by support members 28A and 28B, respectively. The support members 28A and 28B are connected by a connecting member 30 and are integrally rotated with the rotating body of the sterilization wheel 14.

The upper and lower ends of the central shaft 26B are each extended from the upper and lower ends of the cylindrical shaft 26A. A lever 32B is attached to the lower end of the central shaft 26B and the base end of the gripper part 18B is attached to the upper end of the central shaft 26B. On the other hand, a lever 32A is attached to the midpoint between the upper and lower ends of the cylindrical shaft 26A, and the base end of the gripper part 18A is attached to the upper end of the cylindrical shaft 26A. Namely, the base end of the gripper part 18B is arranged above the base end of the gripper part 18A.

A cam follower 34A and one end of a biasing member 36 such as a coil spring are attached to the tip end of the lever 32A. The other end of the biasing member 36 is attached to the support member 28A and biases the lever 32A or the cam follower 34A radially inward with respect to the sterilization wheel 14. On the radially inner side of the cam follower 34A, a first cam 38, against which the cam follower 34A is pressed by the biasing force of the biasing member 36, is annularly arranged over the entire circumference of the sterilizing wheel 14. Accordingly, as the sterilization wheel 14 rotates, the cam follower 34A moves along the first cam 38, and the gripper part 18A interlocked with the cam follower 34A swings about the rotational shaft 26.

Furthermore, the gripper parts 18A, 18B are connected by a biasing member (biasing means) 40 such as a coil spring on the tip end side with respect to the rotational shaft 26. The biasing member 40 biases the gripper parts 18A, 18B in the direction that closes the gripper parts 18A and 18B.

On the other hand, the cam follower 34B interlocking with the gripper part 18B only engages with the provided second cam 42 at locations where the container V is delivered from the supply wheel 12 and delivered to the discharge wheel 16. Namely, the cam follower 34B does not engage with a cam in any other location. Therefore, the gripper part 18B swings integrally with the gripper part 18A around the rotational shaft 26 via the biasing force of the biasing member 40, except at the delivery locations where the cam follower 34B engages with the second cam 42.

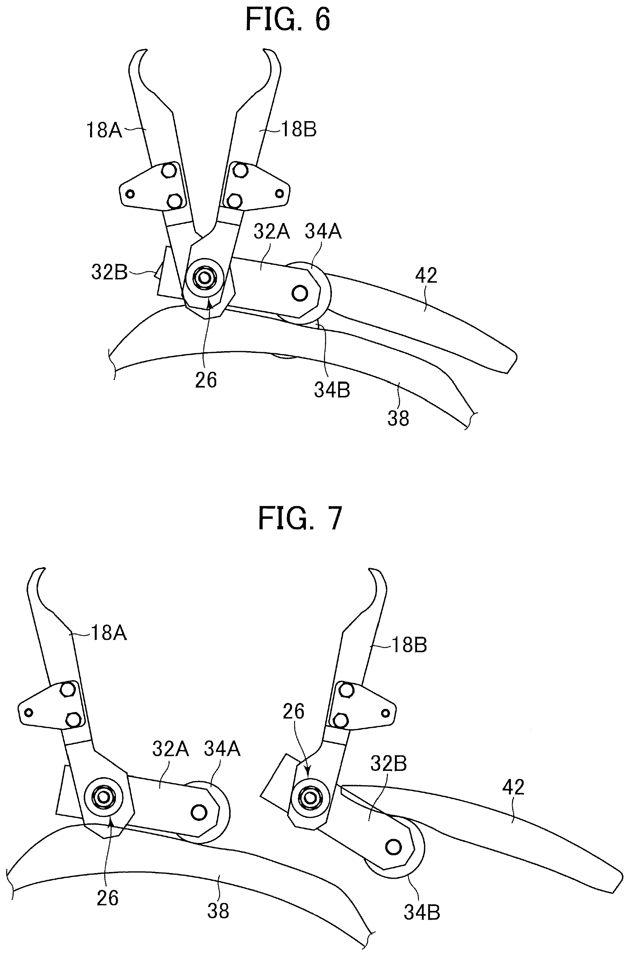

FIG. 6 illustrates the state when the mechanical gripper 18 is opened in the delivery position, the cam follower 34A is engaged with the first cam 38, and the cam follower 34B is engaged with the second cam 42. In order to show the engagement of the cam follower 34B with the second cam 42, which is partially obscured in Fig. 6 due to overlapping components, FIG. 7 schematically illustrates the configuration of the gripper part 18A, cam follower 34A, and first cam 38 separately on the left from the configuration of the gripper part 18B, cam follower 34B, and second cam 42 on the right for convenience.

As illustrated in FIGS. 6 and 7, at the delivery position the cam follower 34A is pushed radially outward from the reference position (reference radius) of the first cam 38 by the first cam 38, and the gripper part 18A is rotated forward in the container conveyance direction. On the other hand, the cam follower 34B is pushed radially inward by the second cam 42, and the gripper part 18B is rotated rearward in the container conveyance direction against the biasing force of the biasing member 40. As a result, the mechanical gripper 18 is opened at the delivery position and the container V can be delivered from and to the supply wheel 12 and the discharge wheel 16, respectively.

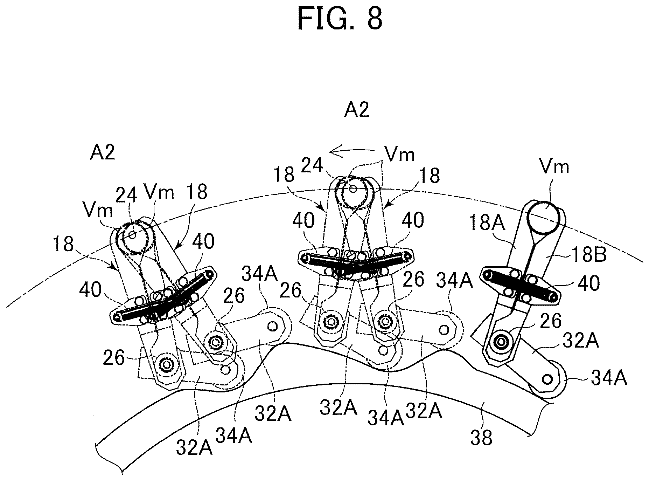

With reference to FIG. 8, which is an enlarged plan view of the inner surface sterilization area A2, an exemplary swing motion of the mechanical gripper 18 along the container conveyance direction will be described.

Outside the delivery position and the inner surface sterilization area A2, the cam follower 34A is maintained at the reference position by the first cam 38, and the orientation of the gripper part 18A is maintained in the radial direction. Since the cam follower 34B is free from any cam in these locations, the gripper part 18B is pressed against the gripper part 18A by the biasing force of the biasing member 40. As a result, the gripper part 18B is maintained in the same direction as the gripper part 18A, which is in the radial direction of the sterilization wheel 14, and the mechanical gripper 18 is maintained in the closed state. Namely, the orientation of the mechanical gripper 18 is determined by the first cam 38 and the cam follower 34A.

On the other hand, in the inner surface sterilization area A2, the gripper part 18A is swung back and forth in the container conveyance direction via the engagement of the cam follower 34A with the first cam 38. In this situation, since the cam follower 34B is free from any cam, the gripper part 18B is pressed against the gripper part 18A by the biasing member 40 (the mechanical gripper 18 is in the closed state) and thereby integrally swung together with the gripper part 18A.

FIG. 8 illustrates the postures of the mechanical gripper 18 at five positions as it moves along the first cam 38. On the upstream side of the first inner sterilization area A2, the cam surface of the first cam 38 is in the reference position and the mechanical gripper 18 is oriented in the radial direction of the sterilization wheel 14. When the mechanical gripper 18 reaches the first inner surface sterilization area A2, the cam follower 34A is pushed radially outward from the reference position by the first cam 38. Thereby, the mechanical gripper 18 is rotated forward in the conveyance direction, and the mouth portion Vm of the container V is advanced below the inner surface sterilizing nozzle 24. Thereafter, as the sterilization wheel 14 further rotates, the cam follower 34A is pushed back radially inward to the reference position, and the mechanical gripper 18 is rotated backward until it is oriented in the radial direction. As a result, the position of the mouth portion Vm of the container V gripped by the mechanical gripper 18 is maintained below the inner surface sterilizing nozzle 24. As the sterilization wheel 14 is further rotated, the cam follower 34A is pushed radially inward from the reference position, and the mechanical gripper 18 is rotated backward in the conveyance direction. As a result, the mouth portion Vm of the container V gripped by the mechanical gripper 18 is maintained below the inner surface sterilizing nozzle 24 that has passed by.

As the mechanical gripper 18 passes through the first inner surface sterilization area A2, the mechanical gripper 18 is moved forward once again and directed radially outward. When the mechanical gripper 18 reaches the second inner surface sterilization area A2, the mechanical gripper 18 is rotated forward and the mouth portion Vm of the container V is advanced below the sterilizing nozzle 24, the same as in the first inner surface sterilization area A2. Further, the mechanical gripper 18 is rotated backward, and the mouth portion Vm is maintained under the inner surface sterilizing nozzle 24 for a certain period of time.

As described above, according to the present embodiment, the direction of the mechanical gripper also can be swung back and forth with respect to the conveying direction with a simple configuration. Thereby, the degrees of freedom are expanded in designing a conveyance system that alternately transfers containers between a mechanical gripper and a flat spring type gripper.

In the present embodiment, the sterilization wheel was described as an exemplary component of a conveyance system. However, for the purpose of ensuring the resident time of a container at a specific position without changing the conveyance speed, it is not limited to the sterilization wheel but is also applicable to other types of conveyance devices other than the wheel type (for example, linear-type conveyance devices). Furthermore, in the present embodiment, although the first cam was placed on the radially inner side and the second cam was placed on the radially outer side, it is also possible to arrange the first cam on the radially outer side and the second cam on the radially inner side. In such case, the gripper part 18A will rotate in conjunction with the swinging gripper part 18B.

## Claims

1. A mechanical gripper (18), comprising:
a pair of gripper parts (18A, 18B) pivotally arranged about the same axis (26);
a biasing member (36) that biases the gripper parts (18A, 18B) to approach each other;
a first cam follower (34A) connected to one of the gripper parts (18A);
a second cam follower (34B) connected to the other of the gripper parts (18B);
a first cam (38) that engages with the first cam follower (34A) for displacing the first cam follower (34A); and
a second cam (42) that engages with the second cam follower (34B) for displacing the second cam follower (34B);
**characterised in that** the first cam follower (34A) is configured to engage with the first cam (38) and the second cam follower (34B) is configured to engage with the second cam (42) such that the first cam follower (34A) and the second cam follower (34B) are both displaced when opening/closing the pair of gripper parts (18A, 18B); and
either one of the first cam follower (34A) or the second cam follower (34B) is configured to be engaged with the first cam (38) or the second cam (42) accordingly in order to be displaced when swinging the pair of gripper parts (18A, 18B).

## Patentansprüche

1. Mechanischer Greifer (18), umfassend:
ein Paar von Greiferteilen (18A, 18B), die über die gleiche Achse (26) schwenkbar angeordnet sind;
ein Vorspannelement (36), das die Greiferteile (18A, 18B) vorspannt, damit sie sich einander nähern;
einen ersten Nockenstößel (34A), der mit einem der Greiferteile (18A) verbunden ist;
einen zweiten Nockenstößel (34B), der mit dem anderen der Greiferteile (18B) verbunden ist;
einen ersten Nocken (38), der zum Verlagern des ersten Nockenstößels (34A) in den ersten Nockenstößel (34A) eingreift; und
einen zweiten Nocken (42), der zum Verlagern des zweiten Nockenstößels (34B) in den zweiten Nockenstößel (34B) eingreift;
**dadurch gekennzeichnet ist, dass**
der erste Nockenstößel (34A) so ausgebildet ist, dass er in den ersten Nocken (38) eingreift, und der zweite Nockenstößel (34B) so ausgebildet ist, dass er in den zweiten Nocken (42) eingreift, sodass sowohl der erste Nockenstößel (34A) als auch der zweite Nockenstößel (34B) verlagert werden, wenn das Paar von Greiferteilen (18A, 18B) öffnet/schließt; und
entweder der erste Nockenstößel (34A) oder der zweite Nockenstößel (34B) so ausgebildet ist, dass der erste Nocken (38) oder der zweite Nocken (42) entsprechend in ihn eingreift, um verlagert zu werden, wenn das Paar von Greiferteilen (18A, 18B) schwingt.

## Revendications

1. Pince mécanique (18), comprenant :
une paire de parties de pince (18A, 18B) montées pivotantes autour du même axe (26) ;
un élément de sollicitation (36) qui sollicite les parties de pince (18A, 18B) de manière à les rapprocher l'une de l'autre ;
un premier basculeur (34A) relié à l'une des parties de pince (18A) ;
un second basculeur (34B) relié à l'autre des parties de pince (18B) ;
une première came (38) qui coopère avec le premier basculeur (34A) pour déplacer le premier basculeur (34A) ; et
une seconde came (42) qui coopère avec le second basculeur (34B) pour déplacer le second basculeur (34B) ;
**caractérisée en ce que**
le premier basculeur (34A) est configuré pour coopérer avec la première came (38) et le second basculeur (34B) est configuré pour coopérer avec la seconde came (42) de sorte que le premier basculeur (34A) et le second basculeur (34B) soient tous deux déplacés lors de l'ouverture/fermeture de la paire de parties de pince (18A, 18B) ; et
soit le premier basculeur (34A) soit le second basculeur (34B) est configuré pour coopérer avec la première came (38) ou la seconde came (42) en conséquence pour être déplacé lors de l'oscillation de la paire de parties de pince (18A, 18B).
